(19) Europäisches Patentamt
European Patent Office
Office européen des brevets

(11) **EP 1 560 165 B1**

(12) **FASCICULE DE BREVET EUROPEEN**

(45) Date de publication et mention
de la délivrance du brevet:
**04.04.2012 Bulletin 2012/14**

(51) Int Cl.:
***G07B 17/00*** *(2006.01)*

(21) Numéro de dépôt: **05290148.5**

(22) Date de dépôt: **24.01.2005**

(54) **Dispositif de traitement de courrier au vol**

Vorrichtung zur im Flug Behandlung von Postartikeln

System to treat post items on the fly

(84) Etats contractants désignés:
**DE FR GB**

(30) Priorité: **30.01.2004 FR 0400920**

(43) Date de publication de la demande:
**03.08.2005 Bulletin 2005/31**

(73) Titulaire: **NEOPOST TECHNOLOGIES**
**92220 Bagneux (FR)**

(72) Inventeurs:
• **Nicolas, Christian**
**26300 Chatuzange Le Goubet (FR)**

• **Painault, Didier**
**93170 Bagnolet (FR)**

(74) Mandataire: **Joly, Jean-Jacques et al**
**Cabinet Beau de Loménie**
**158, rue de l'Université**
**75340 Paris cedex 07 (FR)**

(56) Documents cités:
**EP-A- 0 854 445    US-A1- 2003 055 790**

**Description**

La présente invention se situe dans le domaine du traitement de courrier.

Elle vise plus précisément un dispositif de traitement de courrier particulièrement adapté à l'affranchissement au vol et à forte cadence de courrier alimenté en vrac.

Un dispositif de traitement de courrier comporte traditionnellement un module d'affranchissement prévu pour imprimer les timbres et autres informations (flammes,...) sur le courrier.

De façon connue, les informations imprimées au cours de l'affranchissement comportent un code chiffré imposé par les normes internationales, ce code chiffré étant calculé à partir de paramètres déterminés (date, code postal,...).

Dans les modules d'affranchissement utilisant un système d'impression utilisant la technologie jet d'encre, il est important que la vitesse de défilement de l'article, lorsqu'il passe sous la tête d'impression, soit sensiblement constante, même si cette vitesse constante peut être fixée différemment en fonction du courrier à traiter.

Le document US 2003/0055790 (PITNEY BOWES) décrit un système de traitement de courrier comportant des moyens d'affranchissement utilisant une technologie d'impression d'encre et dans lequel la génération du code chiffré requiert une durée comprise entre 200 et 500 ms.

Ce dispositif comporte en conséquence de ce qui précède des moyens d'entraînement du courrier adaptés à faire défiler celui-ci à une vitesse constante au moment où il se trouve sensiblement sous la tête d'impression.

Dans l'agencement PITNEY BOWES, le module de transport du courrier doit être ralenti, pour garantir le temps nécessaire au calcul du code chiffré précité (ce calcul devant nécessairement avoir lieu avant que l'article n'atteigne la tête d'impression), puis accéléré de manière à donner aux articles la vitesse constante pré-requise au moment de l'affranchissement.

Ainsi, le dispositif de traitement de PITNEY BOWES nécessite de freiner et d'accélérer le défilement du tapis voire de l'arrêter.

Ainsi, il ne permet pas de traiter de courrier au vol.

Le système de traitement PITNEY BOWES ne décrit pas non plus la prise en compte du poids des articles, ce poids étant requis pour le chiffrement du code ; il suppose que les articles sont tous de même poids.

En conséquence, ils ne peuvent pas traiter de courrier en vrac.

L'invention vise à résoudre les problèmes précités, à savoir fournir un système pouvant tracter du courrier en vrac et au vol.

A cet effet, l'invention concerne un dispositif de traitement de courrier, notamment adapté au traitement en vrac et/ou au vol, ce dispositif comportant :

- un module d'alimentation d'articles à affranchir,
- des moyens de détection d'au moins une dimension de cet article ;
- des moyens d'évaluation d'une durée de pesée de l'article en fonction de cette dimension ; et
- des moyens de régulation adaptés à prendre en compte la durée de pesée pour réguler la vitesse de défilement de moyens de transport d'un module de pesée, ces moyens de transport étant adaptés à entraîner l'article vers un module d'affranchissement ;
- le module de pesée comportant en outre:

- des moyens de sélection, adaptés à obtenir un article à la fois, à partir du module d'alimentation ;
- un plateau de pesée de l'article ;
- des moyens de calcul d'un code chiffré représentatif notamment du poids de cet article ;
- le module d'affranchissement comportant des moyens d'impression du code chiffré sur l'article et des deuxièmes moyens de transport de l'article, indépendants des moyens de transport du module de pesée.

Conformément à l'invention, la variation de vitesse des moyens de transport du module de pesée est sans effet sur la vitesse des deuxièmes moyens de transport du module d'affranchissement.

Très avantageusement, ce contrôle de la vitesse des moyens de transport du module de pesée, en fonction des dimensions de l'article, permet de garantir un défilement optimisé des articles sur les moyens de transport tout en garantissant une pesée précise.

L'invention permet ainsi de gérer des cadences de l'ordre de 10 000 enveloppes par heure.

Dans un mode préféré de réalisation, les moyens de régulation prennent en outre en compte la durée de calcul du code chiffré pour réguler la vitesse des moyens de transport du module de pesée et garantissent que le transfert de l'article au module d'affranchissement par le module de pesée est effectué après ce calcul.

L'invention permet ainsi de prendre en compte la durée incompressible de calcul du code chiffré, ce qui permet d'éviter les bourrages dans les modules de pesée et d'impression, notamment dans le cas du traitement de courrier en vrac au vol.

Préférentiellement, les moyens de sélection sont adaptés à garantir une distance prédéterminée entre les fronts avants de deux articles consécutifs sur les moyens de transport du module de pesée, cette distance étant, dans un mode préféré de réalisation, égale à la longueur du module de pesée.

Ainsi, il devient possible en connaissant la vitesse de défilement du tapis pour le transport de l'article précédent, de déterminer à partir de quel moment l'article en cours de pesée sera seul sur le tapis.

Grâce à cette caractéristique préférée, l'article se trouve seul sur le plateau de pesée au moment de sa pesée.

Dans un mode préféré de réalisation, les moyens de transport du module de pesée sont adaptés à faire glisser l'article contre une paroi du module de pesée avant son transfert du module d'affranchissement.

Cette caractéristique permet avantageusement de caler et présenter les articles sous la tête d'impression avec une position prédéterminée connue y compris dans le cas d'un traitement de courrier en vrac, c'est-à-dire lorsque les articles à affranchir sont de formats différents.

Dans un mode préféré de réalisation de cette variante, la paroi verticale présente, vue de l'article de courrier, une contre-pente qui tend à maintenir l'article à plat sur les moyens de transport.

Cette contre-pente permet ainsi d'empêcher aux lettres et autres colis de rebiquer vers le haut lorsque ceux-ci glissent le long de la paroi précitée.

Dans un autre mode préféré de réalisation, le module de pesée comporte au moins au niveau du plateau de pesée et de part et d'autre des moyens de transport, deux bords légèrement surélevés par rapport à la surface de ses moyens de transport.

Ces rebords permettent avantageusement de réduire la surface de contact d'un article avec le plateau de pesée, ce qui évite le pivotement des courriers épais ou de grandes dimensions.

D'autres caractéristiques et avantages de la présente invention ressortiront mieux de la description suivante faite à titre indicatif et non limitatif en regard aux dessins annexés sur lesquels :

- La figure 1 représente une vue de dessus d'un dispositif de traitement de courrier selon l'invention, dans un mode préféré de réalisation ;
- la figure 2 est une vue en coupe longitudinale du dispositif de la figure 1 ;
- la figure 3 représente, sous forme d'un organigramme, les principales étapes de la mesure de la vitesse des moyens de transport du mode de pesée dans un mode préféré de réalisation de l'invention ; et
- la figure 4 représente, de façon schématique, une vue en coupe transversale d'une partie du module de pesée conforme à l'invention dans un mode préféré de réalisation.

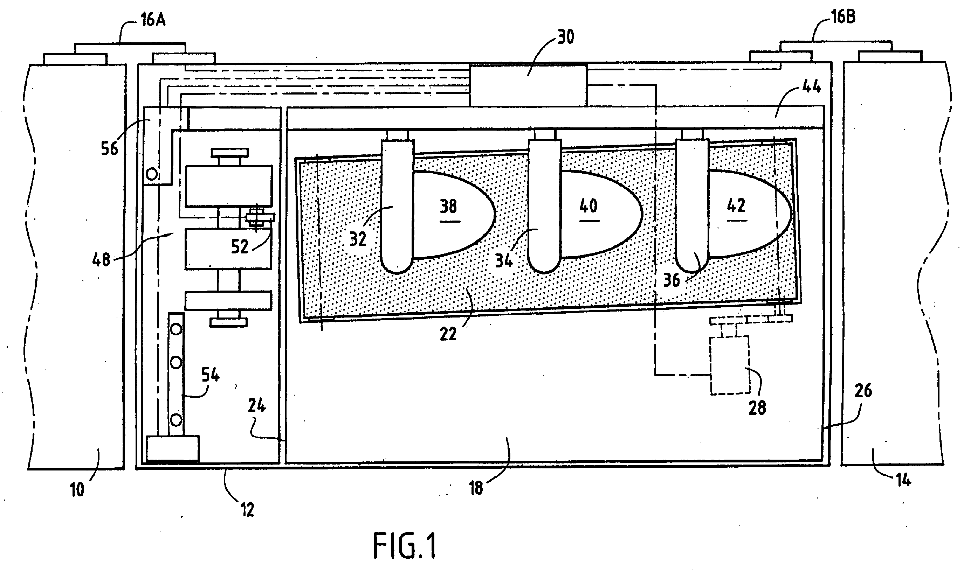

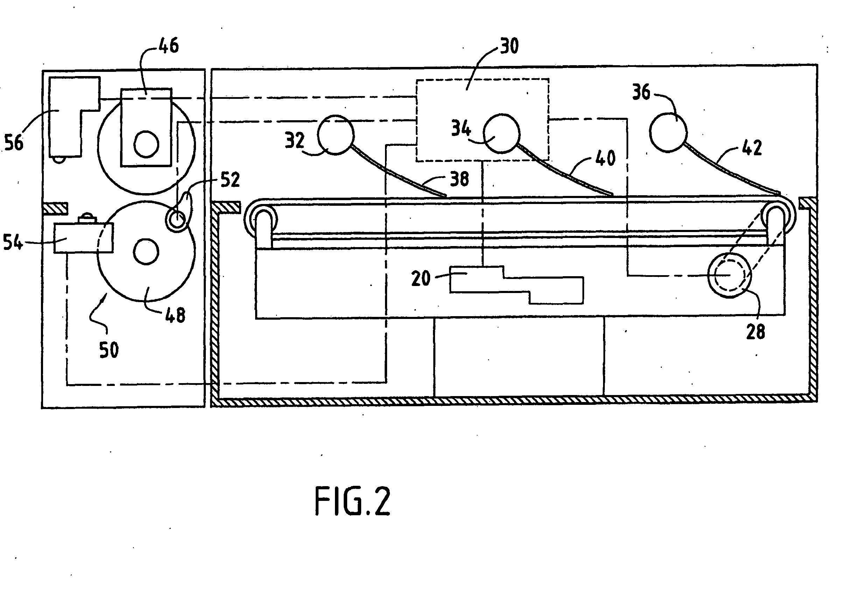

Les figures 1 et 2 représentent un dispositif 1 de traitement de courrier conforme à l'invention, dans un mode préféré de réalisation.

Ce dispositif 1 de traitement de courrier comporte, disposés d'amont en aval par rapport à la direction d'avancée des articles de courrier, un module d'alimentation en articles de courrier 10, un module de pesée 12 et un module 14 d'affranchissement. Chacun de ces éléments est relié au précédent par une liaison informatique 16A, 16B.

Ce module 12 de pesée comporte des moyens de sélection adaptés à obtenir un article à la fois à partir du module d'alimentation 10.

Dans le mode de réalisation décrit ici, ces moyens de sélection sont constitués par une série de rouleaux de transport 46, 48 disposés en entrée du module au niveau d'une face transversale amont 24 et destiné à assurer une extraction des articles de courrier éjectés par le module d'alimentation 10. Selon la configuration de la machine de traitement de courrier, ces rouleaux peuvent parfois être présents directement en sortie du module d'alimentation.

Ce dispositif de traitement peut affranchir des articles de courrier de différents formats, depuis le format américain N°5 (76,2mm*127mm) jusqu'au format européen b4 (250mm*353mm) en passant par le format européen C6/5 (114mm*229mm) et cela jusqu'à une épaisseur déterminée, par exemple 16 mm, correspondant à la hauteur de la fente d'introduction des articles de courrier dans l'alimenteur.

Le module de pesée 12 comporte un plateau de pesée 18 avec sa cellule de pesée 20 et des moyens de transport 22 adaptés à transporter des articles de courrier d'un bord à l'autre de ce plateau.

Dans le mode de réalisation décrit ici, les moyens de transport 22 sont constitués par une unique courroie ou bande d'entraînement 22 qui transporte les articles extraits par le module de sélection d'une position en amont de ce plateau, au niveau de sa face transversale amont 24, vers une position en aval, au niveau d'une face transversale avale 26 de ce plateau. Ces moyens de transport par bande sont actionnés par un moteur d'entraînement 28, avantageusement de type électrique, actionné depuis des moyens de traitement 30, comportant avantageusement un circuit à microprocesseur, qui gère également les informations transitant par les liaisons informatiques.

Un dispositif optionnel de maintien des articles de courrier destiné à plaquer ces articles sur le plateau de pesée pendant leur transport comporte par exemple trois éléments d'appui disposés les uns derrière les autres dans la direction de transport des articles de courrier et formés chacun par un bras de maintien 32, 34, 36 à l'extrémité basse duquel est fixé une bavette 38, 40, 42 ou tout autre moyen de pression souple analogue (brosse, galet, rouleau) dont la longueur est relativement importante pour exercer un effort de pression suffisant sur l'article de courrier. Ces éléments d'appui sont montés perpendiculairement à une paroi verticale longitudinale 44 de mise en référence des articles de courrier.

Dans le mode préféré de réalisation décrit ici, les moyens de transport constitués par la bande d'entraînement motorisée 22 sont adaptés à faire glisser les articles de courrier contre cette paroi longitudinale 44 avant leur transfert au module d'affranchissement 14.

A cet effet, la bande d'entraînement motorisée 22 présente une largeur au moins égale à celle de la bavette ou du moyen de pression élastique, afin d'optimiser le guidage et le calage latéral des articles de courrier, avantageusement favorisés par son inclinaison vers la paroi longitudinale de référence d'un angle déterminé par rapport à la direction de transport des articles de courrier. La valeur de cet angle dépend notamment de la longueur du module de pesée. Pour un module de pesée ayant un plateau de pesée long de 60 cm sur lequel sont montés trois éléments d'appui équipés chacun d'une bavette de 8 cm de largeur, cet angle est d'environ 2,5°.

Selon l'invention, le module de pesée comporte au niveau de son entrée des moyens de détection de format 50, adaptés à détecter au moins une dimension d'un article de courrier.

Ces moyens 50 de détection sont reliés aux moyens de traitement 30 et permettant de lui fournir, dans le mode préféré décrit ici, des données relatives à l'épaisseur, la longueur et la largeur de cet article de courrier.

Ces moyens 50 de détection sont aussi appelés moyens de détection de format.

Ces moyens de détection de format comportent un drapeau d'occultation 52 pour la mesure de la longueur des articles de courrier disposée avantageusement entre les rouleaux d'entraînement et actionnée par le front et l'extrémité arrière des articles de courrier, un capteur optique 54 pour la mesure de la largeur des articles de courrier et un détecteur à effet Hall 56 pour la mesure de l'épaisseur de ces articles de courrier.

Il est important de noter que, si dans l'exemple illustré, ces moyens de détection de format sont disposés dans le module de pesée, il ne s'agit nullement d'une obligation et que, du fait de la liaison informatique 16A existante avec le module d'alimentation 10, il est parfaitement envisageable que les données correspondantes soient fournies directement par ce module d'alimentation lorsque celui-ci en dispose par construction.

Conformément à l'invention, le dispositif de traitement de courrier selon l'invention comporte des moyens d'évaluation d'une durée de pesée de l'article en fonction de son format.

Dans le mode de réalisation décrit ici, cette durée de pesée TPi est obtenue par les moyens de traitement 30 dans la table TB donnée ci-après.

Table TB

| | |
|----|-----|
| F1 | TP1 |
| F2 | TP2 |
| F3 | TP3 |

Cette table TB comporte ainsi deux colonnes et un certain nombre de lignes, chaque ligne associant un temps de pesée TPi à un format Fi d'article.

Ainsi, conformément à ce mode de réalisation, lorsque les moyens de traitement 30 déterminent que le format d'un article est le format F2, ils prennent en compte ce format F2 pour fixer la durée TP2 de cet article.

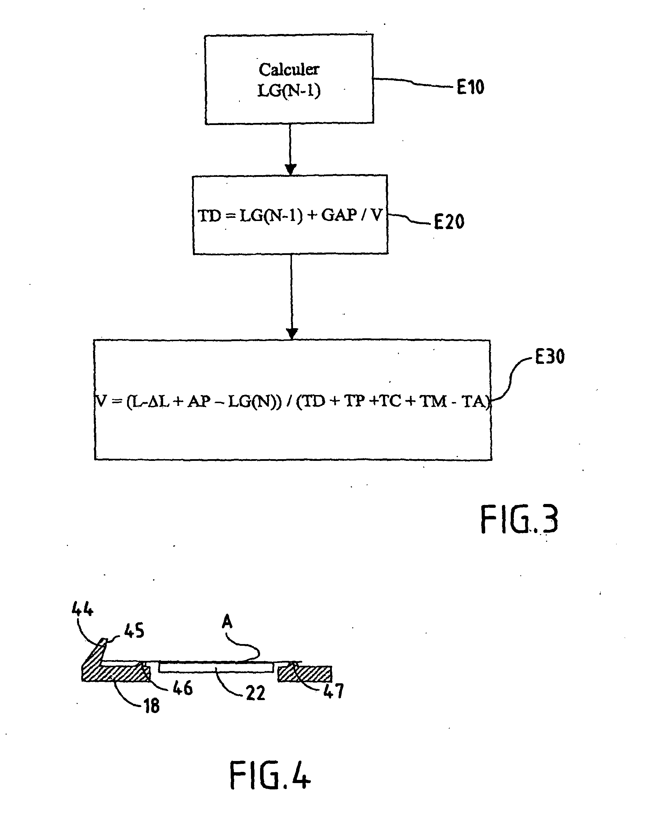

Nous allons maintenant décrire, en référence à la figure 3, les principales étapes E10 à E30 de détermination de la vitesse des moyens de transport du module de pesée conformément à l'invention dans un mode préféré de réalisation, pour le transport d'une enveloppe courante N.

Au cours d'une première étape E10, on détermine la longueur LG(N-1) de l'enveloppe précédente sur la bande d'entraînement 22.

Cette mesure est effectuée, comme décrit précédemment par les moyens de détection 50.

Au cours de l'étape suivante E20, les moyens de traitement 30 mesurent un temps TD d'attente de déclenchement avant la pesée de l'article.

Dans le mode préféré de réalisation décrit ici, ce temps de déclenchement TD est fourni par la formule suivante :

$$TD = LG(N-1) + GAP / V$$

dans laquelle :

- LG(N-1) est la longueur de l'enveloppe précédente sur les moyens de transport 22 ;

- GAP est une distance constante prédéterminée entre deux fronts avants de deux articles consécutifs sur les moyens de transport 22 ; et
- V est la vitesse courante du tapis, c'est-à-dire la vitesse de défilement des moyens de transport 22 pour l'enveloppe précédente N-1.

Après avoir déterminé ce temps TD de déclenchement, les moyens de traitement mesurent, au cours d'une étape E30, la vitesse de défilement des moyens de transport pour l'enveloppe N.

Dans le mode de réalisation décrit ici, cette vitesse V est donnée par la formule suivante :

$$V = (L\text{-}\Delta L + AP - LG(N)) \, / \, (TD + TP + TC + TM - TA)$$

formule dans laquelle :

- L est la longueur de la bande de défilement 22 ;
- $\Delta L$ est une distance constante correspondant à une marge de sécurité que l'on se donne pour s'assurer que l'article est bien positionné sur la bande d'entraînement 22 ;
- AP est la distance entre le plateau de pesée 18 et l'entrée des deuxièmes moyens de transport du module d'affranchissement 14 ;
- LG(N) est la longueur de l'enveloppe N, mesurée comme décrit précédemment par les moyens de détection 50 ;
- TD est la durée de déclenchement calculée à l'étape précédente E20 ;
- TP est le temps de calcul de la pesée obtenue par les moyens de traitement 30 à partir de la table décrite précédemment, en fonction du format de l'article, à savoir TP2 pour un article de format F2 ;
- TC est le temps de calcul nécessaire aux moyens de traitement 30 pour calculer le code chiffré requis par les normes internationales, ce temps étant d'une durée incompressible de l'ordre de 500 ms ;
- TM est le temps connu et constant de gestion de la communication des messages entre les modules de pesée et d'affranchissement, via la liaison informatique 16B ; et
- TA est le temps constant nécessaire mis par un article pour atteindre la tête d'impression du module d'affranchissement à partir de l'entrée de cet article dans ce module d'affranchissement.

Dans un mode préféré de réalisation, la vitesse de défilement des moyens de transport 22 du module de pesée 12 peut avantageusement être maintenue inférieure à la vitesse constante des deuxièmes moyens de transport du module d'affranchissement.

Cette caractéristique facilite le transfert de l'article du module de pesée 12 vers le module d'affranchissement 14, en évitant notamment que l'article ne « pique du nez ».

Ainsi, les moyens de traitement 30 constituent des moyens de régulation de la vitesse V des moyens de transport 22, cette vitesse de défilement prenant en compte la durée de pesée TP2.

Dans le mode préféré de réalisation décrit ci-dessus, les moyens 30 de régulation de la vitesse V ont pris en compte la durée TC de calcul du code chiffré.

Cette caractéristique particulièrement avantageuse permet de garantir que le transfert de l'article au module d'affranchissement 14 est effectué après ce calcul.

Lorsque les moyens de traitement 30 sont suffisamment rapides, le temps de chiffrement TC devient négligeable par rapport au temps de pesée TP, et n'est pas pris en compte explicitement dans le calcul de la vitesse V, qui s'obtient donc avec la formule suivante :

$$V = (L\text{-}\Delta L + AP - LG(N)) \, / \, (TD + TP + TM - TA)$$

Quoi qu'il en soit, à l'issue de l'étape E30 de calcul de la vitesse de défilement des moyens de transport 22, les moyens de traitement 30 contrôlent les moyens de transport 22, à savoir ici la bande d'entraînement 22, pour lui donner cette vitesse de défilement V.

On obtient ainsi un défilement optimisé des articles sur les moyens de transport du module de pesée tout en garantissant une pesée précise de cet article.

Cette invention permet de traiter en vrac et au vol les articles, sans qu'il ne se produise de bourrage au niveau des modules de pesée et d'affranchissement, et sans qu'il soit nécessaire d'arrêter le défilement des moyens de transport 22 du module de pesée.

Les articles sont ensuite transférés de façon connue au module d'affranchissement 14.

Dans le système de traitement selon l'invention, le module d'affranchissement comporte des deuxièmes moyens de transport indépendants des moyens de transport 22 du module de pesée.

Ces derniers moyens de transport sont adaptés à déplacer l'article, à une vitesse constante prédéterminée, sous une tête d'impression jet d'encre pour l'impression du code chiffré obtenu au cours de l'étape E30, et d'autres informations si nécessaire.

Dans le mode de réalisation décrit ici, les moyens de sélection sont adaptés à garantir la distance GAP prédéterminée entre les fronts avants de deux articles consécutifs sur les moyens de transport 22 du module de pesée.

Pour cela, les moyens de sélection, extraient un article donné des moyens d'alimentation au moment du déclenchement de la pesée de l'article N-1 précédent, soit après le délai TE compté à partir de l'extraction de cet article N-1.

Ainsi, dans ce mode de réalisation, le module de pesée garantit que lors de la pesée d'un article, seul celui-ci se trouve sur le plateau de pesée, au moment de sa pesée.

Dans un mode préféré de réalisation, lorsque le temps constant TA mis par l'article pour atteindre la tête d'impression à partir de l'entrée du module d'affranchissement est supérieur au temps de chiffrement TC, on augmente le temps de pesée de l'article, en choisissant un temps de pesée TP3, à partir de la table TB, supérieur au temps TP2 associé dans cette table TB au format F2 de cet article.

Ce temps de pesée TP' allongé, permet d'obtenir une pesée plus fiable en ce que l'on s'affranchit de certains bruit affectant la précision de la pesée, par exemple, engendrés par les vibrations du système de traitement

La figure 4 représente, de façon schématique, une vue en coupe transversale d'une partie du module de pesée 12.

Dans ce mode particulier de réalisation, la paroi latérale 44 du module de pesée 12 comporte une contre-pente 45 dirigée, à savoir une inclinaison tournée vers l'article de courrier A en cours de transfert.

Cette contre-pente 45 tend avantageusement de maintenir l'article A à plat sur la bande de transport 22 lorsque celui-ci glisse le long de cette paroi 44.

Dans un mode préféré de réalisation, le module de pesée comporte, au niveau du plateau de pesée 18, deux bords 46 et 47 légèrement surélevés par rapport à la surface de la bande de transport 22.

Ainsi, l'article A est légèrement soulagé sur ses côtés pendant sa pesée, ce qui limite les frottements au niveau du plateau de pesée 18, et garantit que l'article est entraîné par les moyens de transport 22, à la vitesse adéquate V calculée à l'étape E30.

Ce soulèvement est suffisamment faible pour ne pas fausser le résultat de ladite pesée.

**Revendications**

1. Dispositif de traitement de courrier, notamment en vrac, comportant :

  - un module d'alimentation (10) d'articles (A) à affranchir,
  - des moyens (50) de détection d'au moins une dimension dudit article (A) ;
  - un module de pesée (12) comportant :
  - des moyens de sélection (46, 48), adaptés à obtenir un article (A) à la fois, à partir dudit module d'alimentation (10);

    - un plateau (18) de pesée dudit article (A);
    - des moyens de transport (22) dudit article (A);
    - des moyens de calcul (30) d'un code chiffré représentatif notamment du poids (P) dudit article;

  - un module d'affranchissement (14) comportant des moyens d'impression adaptés à imprimer, ledit code chiffré sur ledit article (A) et des deuxièmes moyens de transport dudit article indépendant desdits moyens de transport (22) dudit module de pesée (12);

  **caractérisé en ce qu'**il comporte en outre des moyens (30) d'évaluation d'une durée de pesée dudit article (A) en fonction de ladite au moins une dimension; et

  - des moyens (30) de régulation, adaptés à prendre en compte ladite durée de pesée évaluée, pour réguler une vitesse de défilement (V) desdits moyens de transport, lesdits moyens de transport (22) étant adaptés à entraîner ledit article (A) vers ledit module d'affranchissement.

**2.** Dispositif selon la revendication 1, **caractérisé en ce que** ladite durée de pesée est extraite d'une table (TB) de n lignes associant à chaque ligne un temps de pesée (TPi) à un format d'article (Fi).

**3.** Dispositif de traitement selon la revendication 2, **caractérisé en ce que** lesdits moyens (30) de régulation prennent en compte en outre la durée (TC) de calcul dudit code chiffré pour réguler ladite vitesse de défilement (V).

**4.** Dispositif selon la revendication 3, **caractérisé en ce que**, lorsqu'un temps TA mis par ledit article (A) pour atteindre lesdits moyens d'impression depuis une entrée dudit module d'affranchissement est supérieur à ladite durée TC, ladite durée de pesée prise en compte par lesdits moyens (30) de régulation pour réguler ladite vitesse de défilement (V) est allongée en choisissant dans ladite table (TB) un temps de pesée (TP3) associé à un format (F3) immédiatement supérieur au temps de pesée (TP2) associé au format (F2) correspondant à ladite au moins une dimension.

**Claims**

**1.** Apparatus for handling mail, in particular mail in arbitrarily mixed batches, said apparatus comprising:

- a feed module (10) for feeding in mail items (A) to be franked;
- detector means (50) for detecting at least one dimension of said mail item;
- a weigh module (12) including:

  - selector means (46, 48) adapted to obtain one mail item (A) at a time, from said feed module (10);
  - a weigh tray (18) for weighing said mail item (A);
  - conveyor means (22) for conveying said mail item (A);
  - computer means (30) for computing an enciphered code representing, in particular, the weight (P) of said mail item;

  - a franking module (14) including print means adapted to print said enciphered code onto said mail item (A), and second conveyor means for conveying said mail item that are independent of the conveyor means (22) of said weigh module (12); **characterized in that** it further comprises:
  - evaluator means (30) for evaluating a weighing time taken to weigh said mail item as a function of said at least one dimension; and
  - regulator means (30) adapted to take account of said evaluated weighing time in order to regulate a speed of advance (V) of said conveyor means, said conveyor means (22) being adapted to drive said mail item (A) towards said franking module.

**2.** Apparatus according to claim 1, **characterized in that** said weighing time is extracted from a table (TB) having n lines, each line being associated with a weighing time (TPi) and a mail item format (Fi).

**3.** Apparatus according to claim 2, **characterized in that** said regulator means (30) further take account of the computing time (TC) taken for computing said enciphered code for regulating said speed of advance (V).

**4.** Apparatus according to claim 3, **characterized in that** when a time TA taken by the mail item (A) to reach the print means from an inlet of the franking module is greater that the enciphering time TC, said weighing time taken in account by said regulator means (30) in order to regulate said speed of advance (V) is increased by choosing a weighing time (TP3) associated with a format (F3) from the table (TB) that is immediately greater than the weighing time (TP2) associated with a format (F2) corresponding to said at least one dimension.

**Patentansprüche**

**1.** Vorrichtung zur Bearbeitung von Post, insbesondere loser Post, umfassend:

- ein Modul zum Zuführen (10) von zu frankierenden Sendungen (A),
- Mittel (50) zum Erfassen wenigstens einer Abmessung der Sendung (A),
- ein Wiegemodul (12), umfassend:

  - Auswahlmittel (46, 48), die dazu ausgelegt sind, eine Sendung (A) nach der anderen von dem Zuführmodul (10) zu erhalten,
- eine Platte (18) zum Wiegen der Sendung (A),
- Mittel zum Befördern (22) der Sendung (A),
- Mittel zum Berechnen (30) eines insbesondere für das Gewicht (P) der Sendung repräsentativen chiffrierten Codes,

- ein Frankiermodul (14), das Druckmittel, die dazu ausgelegt sind, den chiffrierten Code auf die Sendung (A) zu drucken, sowie zweite Mittel zum Befördern der Sendung, welche von den Beförderungsmitteln (22) des Wiegemoduls (12) unabhängig sind, umfaßt,

**dadurch gekennzeichnet, daß** sie ferner Mittel (30) zum Abschätzen einer Dauer zum Wiegen der Sendung (A) in Abhängigkeit der wenigstens einen Abmessung sowie

- Regelungsmittel (30) umfaßt, die dazu ausgelegt sind, die geschätzte Wiegedauer zu berücksichtigen, um eine Ablaufgeschwindigkeit (V) der Beförderungsmittel zu regeln, wobei die Beförderungsmittel (22) dazu ausgelegt sind, die Sendung (A) zu dem Frankiermodul mitzunehmen.

2. Vorrichtung nach Anspruch 1, **dadurch gekennzeichnet, daß** die Wiegedauer aus einer Tabelle (TB) mit n Zeilen entnommen wird, die in jeder Zeile einem Sendungsformat (Fi) eine Wiegezeit (TPi) zuordnet.

3. Bearbeitungsvorrichtung nach Anspruch 2, **dadurch gekennzeichnet, daß** die Regelungsmittel (30) ferner die Dauer (TC) zur Berechnung des chiffrierten Codes berücksichtigen, um die Ablaufgeschwindigkeit (V) zu regeln.

4. Vorrichtung nach Anspruch 3, **dadurch gekennzeichnet, daß** dann, wenn eine Zeit TA, die von der Sendung (A) benötigt wird, um die Druckmittel von einem Eingang des Frankiermoduls aus zu erreichen, länger als die Dauer TC ist, die Wiegedauer, welche von den Regelungsmittein (30) berücksichtigt wird, um die Ablaufgeschwindigkeit (V) zu regeln, **dadurch** verlängert wird, daß aus der Tabelle (TB) eine einem Format (F3) zugeordnete Wiegezeit (TP3) ausgewählt wird, die direkt über der Wiegezeit (TP2) liegt, welche dem der wenigstens einen Abmessung entsprechenden Format (F2) zugeordnet ist.

FIG.1

EP 1 560 165 B1

FIG.2

```
        Calculer
        LG(N-1)              — E10
```

```
   TD = LG(N-1) + GAP / V    — E20
```

```
V = (L-ΔL + AP – LG(N)) / (TD + TP +TC + TM - TA)   — E30
```

## FIG.3

## FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030055790 A